# EUROPEAN PATENT APPLICATION

(11) **EP 4 468 266 A1**
(43) Date of publication of application: **27.11.2024**
(21) Application number: 24177935.4
(22) Date of filing: 24.05.2024
(51) Int. Cl.: G08B 7/06

(54) **SYSTEM AND METHOD FOR MANAGEMENT OF EMERGENCY EVENT IN PREMISES**

(30) Priority: 25.05.2023 US 202363504324 P
(71) Applicant: Carrier Corporation, Palm Beach Gardens, FL 33418 (US)
(72) Inventor: THAKUR, Pavan Kumar Singh, Hyderabad, Telangana 50081 (IN); CHAUDHARI, Harshal Subhash, Hyderabad, Telangana 50081 (IN); OZERY, Nissim, Bradenton, Florida 34202 (US)
(74) Representative: Dehns

(57) **Abstract**

A system (100) and method (300) for management of an emergency event in a premises (150) is disclosed. The method includes receiving, by a computing device (200), from any one or more sensors (102), signals indicative of an emergency event; receiving, by the computing device, from the one or more sensors, a location of the emergency event within the premises; receiving, by the computing device, from any one or more electronic devices (192), inputs relating to parameters of the emergency event; receiving, by the computing device, from the one or more electronic devices, a corresponding location of the associated one or more persons (190); and determining, by the computing device, for each person, an evacuation route from a corresponding current location of each person to a designated evacuation location (152). The evacuation route is further based on location and parameters of the emergency event, such that potential danger to each person along the corresponding evacuation route is minimized.

## Description

### CROSS-REFERENCE TO RELATED APPLICATION

This patent application claims the benefit of US Provisional Patent Application No. 63/504,324, filed on May 25, 2023, which is incorporated by reference herein in its entirety.

### TECHNICAL FIELD

This invention relates to management of an emergency event in a premises, and more particularly, to determining safe evacuation routes for persons within the premises during occurrence of the emergency event.

### BACKGROUND

During an emergency event, general safety protocols for any premises, such as buildings, outdoor venues where persons may congregate, may include evacuation of persons from within the premises to designated safe areas, such as designated evacuation locations. Based on a size of the premises, and a typical number of persons housed within the premises, the premises may have any number of designated evacuation locations. Safety protocols for the premises may further include designating emergency evacuation routs from various locations within the premises to the designated evacuation locations. The evacuation route may include areas within the premises that are generally and typically used by persons regularly or may include special routes that may be accessed only during emergency events, or a combination of both. Conventionally, premises are provided with safety protocols, which may include signs that are hard placed within the premises to direct persons to designated evacuation locations. Signs may include illuminated strips along floors, walls, and/or ceilings of the premise visually indicating directions to the designated evacuation locations, audio-visual cues to guide persons to designated evacuation locations, etc.

### SUMMARY

According to a first aspect of the invention there is provided a method for management of an emergency event in a premises. The method includes receiving, by a computing device, from any one or more sensors, signals indicative of an emergency event. A plurality of sensors is disposed at different locations in the premises. The plurality of sensors is configured to generate signals indicative of any emergency event. The method further includes receiving, by the computing device, from the one or more sensors, a location of the emergency event within the premises. The method further includes receiving, by the computing device, from any one or more electronic devices, inputs relating to parameters of the emergency event. A plurality of electronic devices is associated with a corresponding plurality of persons. The plurality of persons is located within the premises. The method further includes receiving, by the computing device, from the one or more electronic devices, a corresponding location of the associated one or more persons. The method further includes determining, by the computing device, for each person, an evacuation route from a corresponding current location of each person to a designated evacuation location. The evacuation route for each person is further based on a location of the emergency event within the premises, and parameters of the emergency event, such that potential danger to each person along the corresponding evacuation route is minimized.

Optionally, the method includes determining, by a learning engine, for each person, the evacuation route from the corresponding current location of each person to the designated evacuation location. The computing device includes the learning engine.

Optionally, the learning engine may be trained from a dataset including a plurality of evacuation routes from different locations within the premises to different designated evacuation locations for the premises.

Optionally, the method includes deploying, by the computing device, countermeasures within the premises to mitigate an intensity of the emergency event.

Optionally, the method includes determining, by the computing device, locations within the premises where the emergency event is occurring that is also free of any persons. The method may include isolating, by the computing device, the determined locations to limit spread of the emergency event.

Optionally, the method includes transmitting, by the computing device, the determined evacuation route for each person, to the corresponding electronic device associated with each person.

Optionally, the method includes generating, by the computing device, an alert to indicate a type of emergency event, a location of the emergency event, and instructions to persons to evacuate. The method may include transmitting, by the computing device, the alert to the corresponding electronic device associated with each person.

Optionally, the method includes generating, by the computing device, a data packet including the type of emergency event, the location of the emergency event, locations of persons within the premises, the parameters of the emergency event, and countermeasures deployed to mitigate the intensity of the emergency event. The method may include transmitting, by the computing device, the data packet to external authorized entities.

According to another aspect of the invention there is provided a system for management of an emergency event in a premises. The system includes a plurality of sensors disposed at different locations in the premises, the plurality of sensors configured to generate signals indicative of any emergency event. The system further includes a plurality of electronic devices associated with corresponding plurality of persons, wherein the plurality of persons is located within the premises. The system further includes a computing device communicably coupled to the plurality of sensors and the plurality of electronic devices. The computing device includes a processor and a memory. The memory stores instructions executable by the processor. The computing device is configured to receive, from any one or more sensors, signals indicative of the emergency event. The computing device is further configured to receive, from the one or more sensors, a location of the emergency event within the premises. The computing device is further configured to receive, from any one or more electronic devices, inputs relating to parameters of the emergency event. The computing device is further configured to receive, from the one or more electronic devices, a corresponding location of the associated one or more persons. The computing device is further configured to determine, for each person, an evacuation route from a corresponding current location of each person to a designated evacuation location. The evacuation route for each person is further based on a location of the emergency event within the premises, and parameters of the emergency event, such that potential danger to each person along the corresponding evacuation route is minimized.

Optionally, the emergency event includes any one or more of a fire event, a shooting event, a chemical spill event, and a natural disaster event.

Optionally, the computing device includes a learning engine. The learning engine may be configured to determine, for each person, the evacuation route from the corresponding current location of each person to the designated evacuation location.

Optionally, the learning engine is trained from a dataset including a plurality of evacuation routes from different locations within the premises to different designated evacuation locations for the premises.

Optionally, the computing device is configured to deploy countermeasures within the premises to mitigate an extent of the emergency event.

Optionally, the computing device is configured to determine locations within the premises where the emergency event is occurring that is also free of any persons. The computing device may be configured to isolate the determined locations to limit spread of the emergency event.

Optionally, the computing device is configured to transmit the determined evacuation route for each person, to the corresponding electronic device associated with each person.

Optionally, the computing device is configured to generate an alert to indicate a type of emergency event, a location of the emergency event, and instructions to persons to evacuate. The computing device may be configured to transmit the alert to the corresponding electronic device associated with each person.

Optionally, the computing device is configured to generate a data packet including the type of emergency event, the location of the emergency event, locations of persons within the premises, the parameters of the emergency event, and countermeasures deployed to mitigate the intensity of the emergency event. The computing device may be configured to transmit the data packet to external authorized entities.

Optionally, each electronic device includes an interface configured to enable exchange of data between the corresponding electronic device and the computing device.

Optionally, the computing device is a cloud-based computing device.

Optionally, the computing device is communicably coupled to the plurality of sensors and the plurality of electronic devices via a wireless communication network.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the subject disclosure of this invention and are incorporated in and constitute a part of this specification. The drawings illustrate various exemplary embodiments of the invention, and are provided for example only.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 is a schematic representation of a system for management of an emergency event in a premises;
FIG. 2 is a detailed schematic block diagram of a cloud server of the system of FIG. 1;
FIG. 3 is a schematic flow diagram for a method for management of an emergency event in a premises; and
FIG. 4 is an exemplary schematic block diagram of a hardware system used for implementing the cloud server of FIG. 2.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

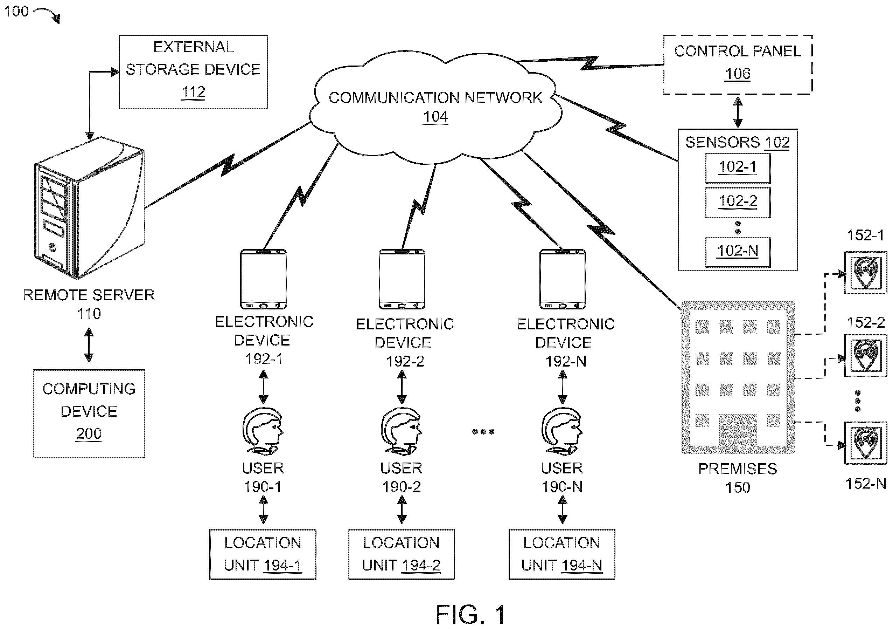

Referring to FIG. 1, a schematic representation of a system 100 for management of an emergency event in a premises 150 is shown. In some embodiments, the premises 150 may refer to any structure, such as a building, an outdoor venue, etc. where persons (such as persons 190) may congregate. In the illustrated embodiment, the premises 150 is a building. The building may be any, such as an office building, a residential building, public spaces, such as restaurants, malls, theaters, etc. The premises 150 may be populated by a plurality of persons 190. The illustrated embodiment of FIG. 1 shows persons 190-1, 190-2... 190-N. The persons 190-1, 190-2... 190-N may be collectively interchangeably referred to as "the persons 190".

The system 100 may further include a plurality of sensors 102 disposed at various locations within the premises 150. The illustrated embodiment of FIG. 1 shows sensors 102-1, 102-2... 102-N. The sensors 102-1, 102-2... 102-N may be collectively interchangeably referred to as "the sensors 102". The sensors 102 may be configured to generate signals indicative of an emergency event. An emergency event may be defined as an event that may threaten the health and safety of the persons 190. The emergency event may be any, such as, without limitations, a fire event, a shooting event, a chemical spill event, a natural disaster event, etc. The sensors 102 may further generate signals indicative of their respective locations within the premises 150. In some embodiments, the signals generated by the sensors 102 may be a combination of signals indicative of the emergency event, and their respective location data. In some embodiments, the sensors 102 may be communicably coupled to one another via a communication network 104.

In some embodiments, the communication network 104 may be a hardwired communication network. The hardwired communication network may be an optic cable, or a metallic cable provided in the structure of the premises 150 in which the sensors 102 are disposed. The hardwired communication network may be configured to transmit low amounts of data. Specifically, the hardwired communication network may be configured to transmit the signal generated by the sensors 102 responsive to detection of the emergency event. When any one of the sensors 102 detects the emergency event, and generates the signal, the signal may be received by, and transmitted through the hardwired communication network to the other sensors 102.

In some embodiments, the communication network 104 may be a wireless communication network. The wireless communication network may be any wireless communication network capable of transferring data between entities of that network such as, without limitations, a carrier network including circuit switched network, a public switched network, a Content Delivery Network (CDN) network, a Long-Term Evolution (LTE) network, a Global System for Mobile Communications (GSM) network and a Universal Mobile Telecommunications System (UMTS) network, an Internet, intranets, local area networks, wide area networks, mobile communication networks, Bluetooth low energy (BLE) networks, and combinations thereof. Through the communication network 104, the sensors 102 may be configured to transmit signals to each other or to an external device.

The system 100 further includes a server 110. The sensors may be communicably coupled to the server 110. In some embodiments, the server 110 may be a remote server. In some embodiments, the server 110 may be a cloud-based server. The server 110 may further be communicably coupled to an external storage device 112 the communication network 104. The external storage device 112 may be configured within the server 110 or may be a cloud-based storage device.

The server 110 may be configured with a computing device 200. The computing device 200 may be configured for management of the emergency event in the premises 150. The computing device 200 may be implemented by way of a single device or a combination of multiple devices that may be communicably coupled or networked together. The computing device 200 may be implemented in hardware or a suitable combination of hardware and software. The computing device 200 may be a hardware device including a processor executing machine-readable program instructions. The "hardware" may include a combination of discrete components, an integrated circuit, an application-specific integrated circuit, a field programmable gate array, a digital signal processor, or other suitable hardware. The "software" may include one or more objects, agents, threads, lines of code, subroutines, separate software applications, two or more lines of code or other suitable software structures operating in one or more software applications or on one or more processors. The processor may include, for example, without limitations, microprocessors, microcomputers, microcontrollers, digital signal processors, central processing units, state machines, logic circuits, any devices that manipulate data or signals based on operational instructions, and the like. Among other capabilities, the processor may fetch and execute computer-readable instructions in the memory operationally coupled with the computing device 200 for performing tasks such as data processing, input/output processing, feature extraction, and/or any other functions. Any reference to a task in the present disclosure may refer to an operation being or that may be performed on data.

The system 100 may further include a plurality of electronic devices 192 associated with the corresponding plurality of persons 190. The illustrated embodiment of FIG. 1 shows electronic devices 192-1, 192-2... 192-N associated with respective persons 190-1, 190-2... 190-N. The electronic devices 192-1, 192-2... 192-N may be collectively interchangeably referred to as "the electronic devices 192".

The electronic devices 192 may be communicably coupled to the computing device 200, and other components of the system 100 through the communication network 104. The electronic devices 192 may be used to provide input to any one or more of the components of the system 100. In some instances, the electronic devices 192 may include audio-visual devices, such as display screens, LED lighting displays, speakers, etc. The electronic devices 192 may be any electrical, electronic, electromechanical, or computing device. The electronic devices 192 may include, without limitations, a mobile device, a smart phone, a Personal Digital Assistant (PDA), a tablet computer, a phablet computer, a wearable device, a Virtual Reality/Augment Reality (VR/AR) device, a laptop, a desktop, and the like.

The electronic devices 192 may be configured to execute a set of instructions to generate an interface to exchange data with other components of the system 100. The set of instructions may result in opening of an application or a software. In some cases, executing the set of instruction may result in opening of an application hosted on an external server, such as a website. In some embodiments, the electronic devices 192 may be configured to request the associated persons 190 to provide inputs relating to parameters of the emergency event, as perceived by the persons 190. The parameters may include, without limitations, a type of emergency event, a location of the emergency event, a state of the emergency event, an intensity of the emergency event, a location of the associated persons 190, a current medical and/or ambulatory state of the associated persons 190, a current medical and/or ambulatory state of any other persons in a vicinity, etc.

The electronic devices 192 may further be configured to gather location data of the persons 190 associated with it. The location data may be obtained from a location unit 194, such as a global positioning system (GPS) unit. The location unit 194 may be configured within the electronic device 192 or may be communicably coupled to the electronic device 192. In some examples, the location unit 194 may be any other device configured on the persons 190 and configured to generate signals indicative of the location of the persons 190 within the premises 150.

In some embodiments, the system 100 may further include a control panel 106. The control panel 106 may be communicably coupled to the sensors 102, and the computing device 200. The control panel 106 may be configured to receive the signals from the sensors 102 indicative of the emergency event, and perform a portion of the operations of the computing device 200. For example, the control panel 106 may be configured to notify the persons 190 within the premises 150 of the occurrence of the emergency event.

Further, the system 100 may also include other units such as a display unit, an input unit, an output unit, and the like; however, the same are not shown in the FIG. 1, for the purpose of clarity. Also, in FIG. 1, only few units are shown; however, the computing device 200 may include multiple such units or the computing device 200 may include any such numbers of the units, obvious to a person skilled in the art or as required to implement the features of the present invention.

During an emergency event, general safety protocols for premises 150 may include evacuation of persons 190 from within the premises 150 to designated safe areas, such as designated evacuation locations 152. Based on a size of the premises 150, and a typical number of persons 190 housed within the premises 150, the premises 150 may have any number of designated evacuation locations. The illustrated embodiment of FIG. 1 shows the evacuation locations 152-1, 152-2... 152-N. The evacuation locations 152-1, 152-2... 152-N may be collectively interchangeably referred to as "the evacuation locations 152". Safety protocols for the premises 150 may further include designating emergency evacuation routs from various locations within the premises 150 to the designated evacuation locations 152. The evacuation route may include areas within the premises 150 that are generally and typically used by persons 190 regularly or may include special routes that may be accessed only during emergency events, or a combination of both.

Conventionally, premises are provided with safety protocols, which may include signs that are hard placed within the premises to direct persons to designated evacuation locations. Signs may include illuminated strips along floors, walls, and/or ceilings of the premise visually indicating directions to the designated evacuation locations, audio-visual cues to guide persons to designated evacuation locations, etc. However, a limitation of such conventional system is that the persons are not provided with real-time information of a nature or development of the emergency event. If a certain evacuation route that a person is taking is compromised due to the emergency event, the person may not have prior knowledge of the compromise until they reach the compromised location. Thus, the persons may lose crucial time in being evacuated, and may further be subjected to the potential hazards of the emergency event. Further, if any sensor should fail due to the emergency event, or other reasons, there may not be any means to receive updated information relating to the emergency event at a location of the failed sensor. As a result, crucial information relating to the emergency event at the location of the failed sensor may not be available.

Thus, there is a requirement for a more robust means to provide information during an emergency event. Further, there is a requirement for a means to effectively guide persons from within the premises towards designated evacuation locations through safe evacuation routes, based on real-time information available relating to the emergency event.

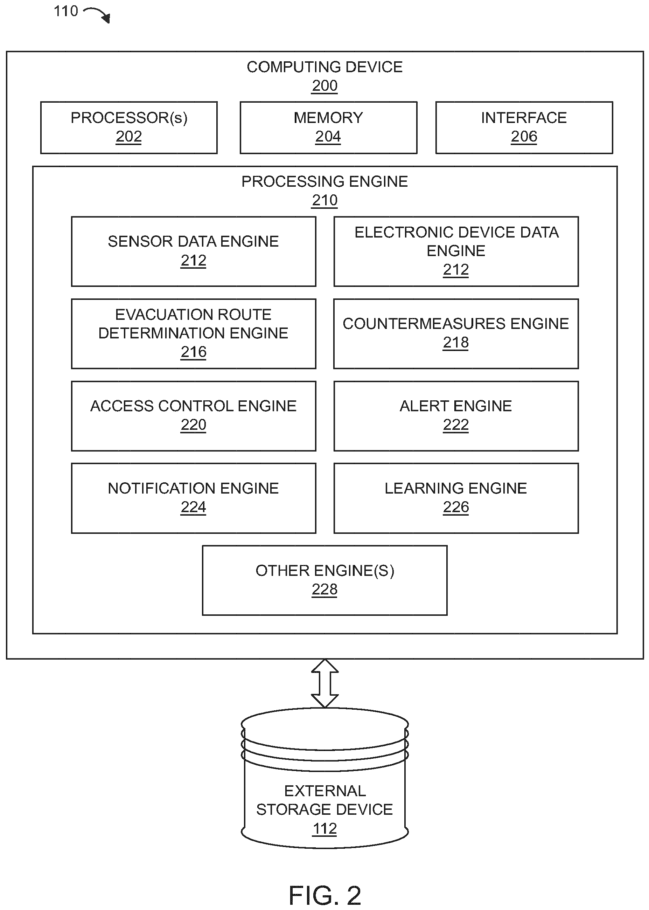

Referring to FIG. 2, a detailed schematic block diagram of the server 110 of the system 100, including the computing device 200, is shown. The computing device 200 includes a processor 202, and a memory 204 communicably coupled to the processor 202. The memory 204 may store instructions executable by the processor 202 to implement the computing device 200. The computing device 200 further includes an interface 206. The interface 206 may include a variety of interfaces, for example, interfaces for data input and output devices, referred to as I/O devices, storage devices, and the like. The interface 206 may also provide a communication pathway for one or more components of the computing device 200. The computing device 200 is communicably coupled to the external storage device 112 (shown in FIG. 1). The external storage device 112 may be configured to store data generated during execution of instructions by the processor 202 in order to implement the computing device 200.

Referring now to FIGs. 1 and 2, in some embodiments, the computing device 200 includes a processing engine 210. The processing engine 210 may be implemented as a combination of hardware and programming (for example, programmable instructions) to implement one or more functionalities of the processing engine 210. In some examples, the processing engine 210 may be implemented by electronic circuitry.

The processing engine 210 may include a sensor data engine 212, an electronic device data engine 214, an evacuation route determination engine 216, a countermeasures engine 218, an access control engine 220, an alert engine 222, a notification engine 224, a learning engine 226, and other engine(s) 228. The other engine(s) 228 may include one or more engines configured to perform one or more functions ancillary functions associated with the processing engine 210.

The sensor data engine 212 is configured to receive, from any one or more sensors 102, signals indicative of the emergency event. In some embodiments, responsive to receiving the signals from any one or more sensors 102, the computing device 200 may initiate management of the emergency event. The sensor data engine 212 is further configured to receive, from the one or more sensors 102, a location of the emergency event within the premises 150.

In an example, the sensors 102 may be fire sensors configured to detect fire events. The sensors 102 may include smoke, and temperature sensors, and responsive to positive detection of smoke and/or increase in temperature of a location that the sensor is in, the sensors 102 may generate signals indicative of a fire emergency event, along with also indicating a location of detection of the fire emergency event.

In another example, the sensors 102 may be chemical spill sensors configured to detect chemical spill events. The sensors 102 may include gas/vapor sensors, chemical sensors, etc., and responsive to positive detection of leakage of a chemical material that is considered noxious, the sensors 102 may generate signals indicative of a chemical spill emergency event, along with also indicating a location of detection of the chemical spill emergency event.

In another example, the sensors 102 may be shooting event sensors configured to detect presence and/or usage of firearms within the premises 150. The sensors 102 may include noise detectors, flash detectors, gas/vapor sensors, visual image sensors, etc., and responsive to positive detection of presence and/or usage of firearms within the premises 150, the sensors 102 may generate signals indicative of a shooting emergency event, along with also indicating a location of detection of the shooting emergency event.

In another example, the sensors 102 may be natural disaster event sensors configured to detect occurrence of natural disasters and their effects within the premises 150. The natural disasters may be any, such as flooding, storms, earthquakes, etc., which may cause structural damage to the premises 150. The sensors 102 may include seismograph sensors, water sensors, wind sensors, vibration sensors, etc., and responsive to positive detection of natural disaster, the sensors 102 may generate signals indicative of a natural disaster emergency event, along with also indicating a location of detection of the natural disaster emergency event.

The electronic device data engine 214 is configured to receive, from one or more electronic devices 192, inputs relating to parameters of the emergency event. The inputs may be provided by the persons 190 associated with the electronic devices 192. The electronic devices 192 may be configured to prompt the persons 190 to provide the inputs. The electronic device data engine 214 is further configured to receive, from the one or more electronic devices, a corresponding location of the associated one or more persons.

In some embodiments, the electronic devices 192 may be configured to prompt the persons 190 to provide inputs relating to the location of the persons 190. In some embodiments, the electronic devices 192 may issue such prompts at regular frequencies. Thus, even in the absence or malfunctioning state of location units 194, the electronic device data engine 214 may receive information pertaining to a real-time location of the persons 190.

The evacuation route determination engine 216 is configured to determine, for each person 190, an evacuation route from a corresponding current location of each person 190 to a designated evacuation location 152. The evacuation route for each person 190 is further based on a location of the emergency event within the premises 150, and parameters of the emergency event, such that potential danger to each person 190 along the corresponding evacuation route is minimized. In some embodiments, the evacuation route determination engine 216 is configured to provide real-time evacuation route details. For example, if a certain evacuation route is compromised, the evacuation route determination engine 216 is configured to determine, in real-time, an alternate evacuation route in order to guide the persons 190 to the designated evacuation location 152. The evacuation route determination engine 216 may determine a status of different evacuation routes within the premises 150 based on data available from different sensors, or based on data provided by the persons 190. In some embodiments, the evacuation route determination engine 216 may be further configured to evaluate various access functionalities in the premises 150. Access functionalities may include devices and apparatuses provided in the premises 150 that facilitate movement of persons 190 within the premises 150, such as, without limitations, escalators, elevators, doorways, etc. the status of the determined evacuation route may further consider the operational status of the access functionalities of the premises 150, such that the person 190 may have unhindered access through the determined evacuations routes towards the designated evacuation location 152.

The evacuation route determination engine 216 is further configured to transmit the determined evacuation route for each person 190, to the corresponding electronic device 192 associated with each person 190. Hence, each person 190 may receive a customized evacuation route that they may take in order to safely exit the premises 150 and reach the designated evacuation location 152.

In some embodiments, the countermeasures engine 218 is configured to deploy countermeasures within the premises to mitigate an extent of the emergency event. For example, if the emergency event is a fire emergency event, the countermeasures engine 218 may be configured to deploy fire-fighting measures, such as sprinklers, fire extinguishers, etc. In another example, if the emergency event is a chemical spill emergency event, the countermeasures engine 218 may be configured to deploy countermeasures, such as exhaust fans, etc.

In some embodiments, the access control engine 220 may be further configured to determine locations within the premises where the emergency event is occurring that is also free of any persons 190. The countermeasures engine 218 may then be configured to isolate the determined locations to limit spread of the emergency event. In one example, the access control engine 220 may be configured to operate the access functionalities of the premises 150, such as close doors or restrict access to persons moving towards a site of the emergency event. In another example, the access control engine 220 may operate the access functionalities of the premises 150, such as close doors in order to limit spread of emergency events, such as fires, chemical spills etc. from the location of the emergency event to other regions of the premises 150.

In some embodiments, the access control engine 220 may further be configured to operate the access functionalities to facilitate the persons 190 moving along the determined evacuation route so that the persons 190 may have an unhindered access through the determined evacuations routes towards the designated evacuation location 152. For example, the access control engine 220 may operate escalators, elevators or doors to allow the persons 190 to move therethrough.

In some embodiments, the alert engine 222 is configured to generate an alert to indicate a type of emergency event, a location of the emergency event, and instructions to persons 190 to evacuate.

In some embodiments, the notification engine 224 is configured to transmit the alert to the corresponding electronic device 192 associated with each person 190.

In some embodiments, the notification engine 224 is further configured to generate a data packet including the type of emergency event, the location of the emergency event, locations of persons 190 within the premises 150, the parameters of the emergency event, and countermeasures deployed to mitigate the intensity of the emergency event. The notification engine 224 is further configured to transmit the data packet to external authorized entities. The external authorities may be any, such as first responders, medical teams, etc. who may arrive at the premises 150 to assist in evacuation and damage mitigation.

In some embodiments, the learning engine 226 is configured to determine, for each person, the evacuation route from the corresponding current location of each person 190 to the designated evacuation location 152.

In some embodiments, the learning engine 226 is trained from a dataset including a plurality of evacuation routes from different locations within the premises 150 to different designated evacuation locations 152 for the premises 150.

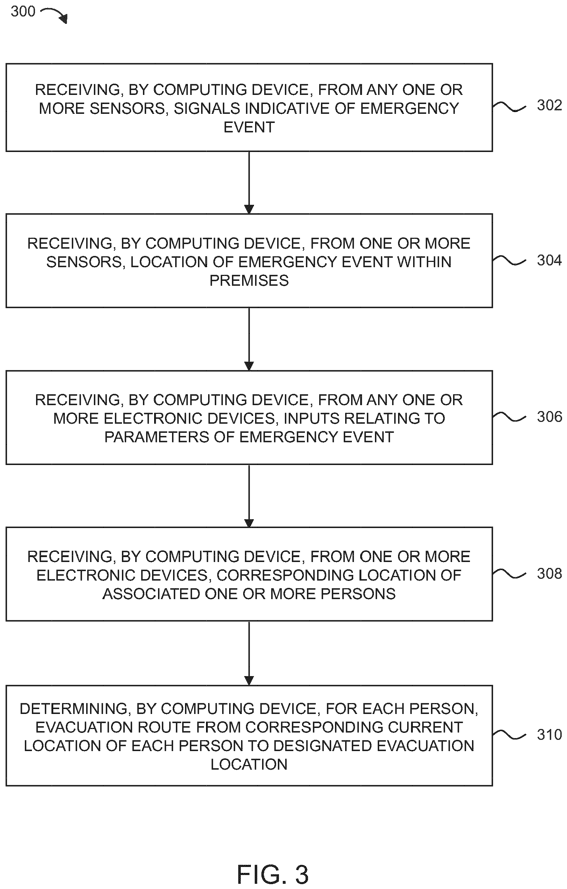

Referring to FIG. 3, a schematic flow diagram for a method 300 for management of an emergency event in a premises 150 is shown. Referring now to FIGs. 1 to 3, at step 302, the method 300 includes receiving, by the computing device 200, from any one or more sensors 102, signals indicative of the emergency event. At step 304, the method 300 further includes receiving, by the computing device 200, from the one or more sensors 102, the location of the emergency event within the premises 150. At step 306, the method 300 further includes receiving, by the computing device 200, from any one or more electronic devices 192, inputs relating to parameters of the emergency event. At step 308, the method 300 further includes receiving, by the computing device 200, from the one or more electronic devices 192, corresponding location of the associated one or more persons 190. At step 310, the method 300 further includes determining, by the computing device 200, for each person 190, the evacuation route from the corresponding current location of each person 190 to the designated evacuation location 152.

In some embodiments, the method 300 further includes determining, by the learning engine 224, for each person 190, the evacuation route from the corresponding current location of each person 190 to the designated evacuation location 152. The computing device 200 includes the learning engine 224.

In some embodiments, the method 300 further includes deploying, by the computing device 200, countermeasures within the premises 150 to mitigate the intensity of the emergency event.

In some embodiments, the method 300 further includes determining, by the computing device 200, locations within the premises where the emergency event is occurring that is also free of any persons 190. The method 300 further includes isolating, by the computing device 200, the determined locations to limit spread of the emergency event.

In some embodiments, the method 300 further includes transmitting, by the computing device 200, the determined evacuation route for each person 190, to the corresponding electronic device 192 associated with each person 190.

In some embodiments, the method 300 further includes generating, by the computing device 200, the alert to indicate a type of emergency event, a location of the emergency event, and instructions to persons to evacuate. The method 300 further includes transmitting, by the computing device 200, the alert to the corresponding electronic device 192 associated with each person 190.

In some embodiments, the method 300 further includes generating, by the computing device 200, the data packet including the type of emergency event, the location of the emergency event, locations of persons within the premises, the parameters of the emergency event, and countermeasures deployed to mitigate the intensity of the emergency event. The method 300 further includes transmitting, by the computing device 200, the data packet to external authorized entities.

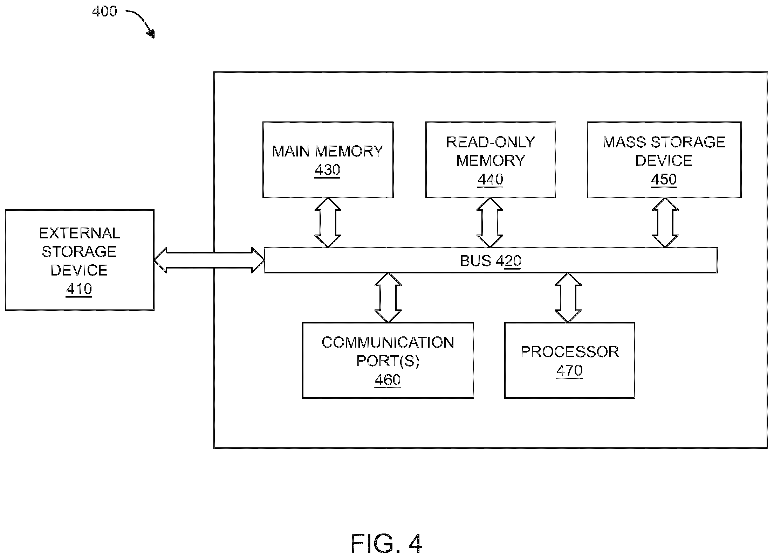

FIG. 4 is an exemplary schematic block diagram of a hardware system used for implementing the computing device 200. As shown in FIG. 4, a computer system 400 can include an external storage device 410, a bus 420, a main memory 430, a read only memory 440, a mass storage device 450, communication port 460, and a processor 470. A person skilled in the art will appreciate that the computer system may include more than one processor and communication ports. Examples of processor 470 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 470 may include various modules. Communication port 460 can be any of an RS-232 port for use with a modem-based dialup connection, a 10/100 Ethernet port, a Gigabit or 10 Gigabit port using copper or fibre, a serial port, a parallel port, or other existing or future ports. Communication port 460 may be chosen depending on a network, such a Local Area Network (LAN), Wide Area Network (WAN), or any network to which computer system connects. Memory 430 can be Random Access Memory (RAM), or any other dynamic storage device commonly known in the art. Read-only memory 440 can be any static storage device(s) e.g., but not limited to, a Programmable Read Only Memory (PROM) chips for storing static information e.g., start-up or BIOS instructions for processor 470. Mass storage 450 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 420 communicatively couples processor(s) 470 with the other memory, storage, and communication blocks. Bus 420 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 470 to software system.

Optionally, operator and administrative interfaces, e.g., a display, keyboard, and a cursor control device, may also be coupled to bus 420 to support direct operator interaction with a computer system. Other operator and administrative interfaces can be provided through network connections connected through communication port 460. The external storage device 410 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities. In no way should the aforementioned exemplary computer system limit the scope of the invention as defined by the appended claims.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A method (300) for management of an emergency event in a premises (150), the method comprising:
receiving, by a computing device (200), from any one or more sensors (102), signals indicative of an emergency event, wherein a plurality of sensors is disposed at different locations in the premises, the plurality of sensors configured to generate signals indicative of any emergency event;
receiving, by the computing device, from the one or more sensors, a location of the emergency event within the premises;
receiving, by the computing device, from any one or more electronic devices (192), inputs relating to parameters of the emergency event, wherein a plurality of electronic devices is associated with a corresponding plurality of persons (190), and wherein the plurality of persons is located within the premises;
receiving, by the computing device, from the one or more electronic devices, a corresponding location of the associated one or more persons; and
determining, by the computing device, for each person, an evacuation route from a corresponding current location of each person to a designated evacuation location (152),
wherein the evacuation route for each person is further based on a location of the emergency event within the premises, and parameters of the emergency event, such that potential danger to each person along the corresponding evacuation route is minimized.

2. The method (300) of claim 1, further comprising determining, by a learning engine (226), for each person (190), the evacuation route from the corresponding current location of each person to the designated evacuation location (152), wherein the computing device (200) comprises the learning engine.

3. The method (300) of claim 2, wherein the learning engine (226) is trained from a dataset comprising a plurality of evacuation routes from different locations within the premises (150) to different designated evacuation locations (152) for the premises.

4. The method (300) of any preceding claim, further comprising deploying, by the computing device (200), countermeasures within the premises (150) to mitigate an intensity of the emergency event.

5. The method (300) of any preceding claim, further comprising:
determining, by the computing device (200), locations within the premises (150) where the emergency event is occurring that is also free of any persons (190); and
isolating, by the computing device, the determined locations to limit spread of the emergency event.

6. The method (300) of any preceding claim, further comprising transmitting, by the computing device (200), the determined evacuation route for each person (190), to the corresponding electronic device (192) associated with each person.

7. The method (300) of any preceding claim, further comprising:
generating, by the computing device (200), an alert to indicate a type of emergency event, a location of the emergency event, and instructions to persons (190) to evacuate; and
transmitting, by the computing device, the alert to the corresponding electronic device (192) associated with each person.

8. The method (300) of any preceding claim, further comprising:
generating, by the computing device (200), a data packet comprising the type of emergency event, the location of the emergency event, locations of persons (190) within the premises (150), the parameters of the emergency event, and countermeasures deployed to mitigate the intensity of the emergency event; and
transmitting, by the computing device, the data packet to external authorized entities.

9. A system (100) for management of an emergency event in a premises (150), the system comprising:
a plurality of sensors (102) disposed at different locations in the premises, the plurality of sensors configured to generate signals indicative of any emergency event;
a plurality of electronic devices (192) associated with corresponding plurality of persons (190), wherein the plurality of persons is located within the premises; and
a computing device (200) communicably coupled to the plurality of sensors and the plurality of electronic devices, the computing device comprising a processor (202) and a memory (204), the memory storing instructions executable by the processor, the computing device configured to:
receive, from any one or more sensors, signals indicative of the emergency event;
receive, from the one or more sensors, a location of the emergency event within the premises;
receive, from any one or more electronic devices, inputs relating to parameters of the emergency event;
receive, from the one or more electronic devices, a corresponding location of the associated one or more persons; and
determine, for each person, an evacuation route from a corresponding current location of each person to a designated evacuation location (152),
wherein the evacuation route for each person is further based on a location of the emergency event within the premises, and parameters of the emergency event, such that potential danger to each person along the corresponding evacuation route is minimized.

10. The system (100) of claim 9, wherein the emergency event comprises any one or more of a fire event, a shooting event, a chemical spill event, and a natural disaster event.

11. The system (100) of claim 9 or 10, wherein the computing device (200) comprises a learning engine (226), and wherein the learning engine is configured to determine, for each person (190), the evacuation route from the corresponding current location of each person to the designated evacuation location (152);
optionally wherein the learning engine is trained from a dataset comprising a plurality of evacuation routes from different locations within the premises to different designated evacuation locations for the premises.

12. The system (100) of any of claims 9 to 11, wherein the computing device (200) is configured to:
deploy countermeasures within the premises (150) to mitigate an extent of the emergency event; and/or
determine locations within the premises where the emergency event is occurring that is also free of any persons (190), and isolate the determined locations to limit spread of the emergency event.

13. The system (100) of any of claims 9 to 12, wherein the computing device (200) is configured to:
transmit the determined evacuation route for each person (190), to the corresponding electronic device (192) associated with each person; and/or
generate an alert to indicate a type of emergency event, a location of the emergency event, and instructions to persons to evacuate; and transmit the alert to the corresponding electronic device associated with each person; and/or
generate a data packet comprising the type of emergency event, the location of the emergency event, locations of persons within the premises (150), the parameters of the emergency event, and countermeasures deployed to mitigate the intensity of the emergency event; and transmit the data packet to external authorized entities.

14. The system (100) of any of claims 9 to 13, wherein each electronic device (192) comprises an interface configured to enable exchange of data between the corresponding electronic device and the computing device (200).

15. The system (100) of any of claims 9 to 14, wherein the computing device (200) is a cloud-based computing device; and/or
wherein the computing device is communicably coupled to the plurality of sensors (102) and the plurality of electronic devices (192) via a wireless communication network (104).
